# EUROPEAN PATENT APPLICATION

(11) **EP 1 659 010 A1**
(43) Date of publication of application: **24.05.2006**
(21) Application number: 05257125.4
(22) Date of filing: 18.11.2005
(51) Int. Cl.: B60G 21/055, F16F 1/16, F16F 1/38

(54) **Angled bushing mount for stabilizer bar**

(30) Priority: 18.11.2004 US 992590
(71) Applicant: Meritor Suspension Systems Company, U.S., Troy, Michigan 48084 (US)
(72) Inventor: Sowinski, Timothy James, Chatham Ontario N7L 2T4 (CA); Kleckner, Mark Allen, Lake Orion Michigan 48362 (US); Bechard, Maurice A., Tupperville Ontario N0P 2M0 (CA); Fader, Joseph A., Brighton Michigan 48114 (US); Lopes, Luiz G., Jr., Canton Michigan 48187 (US); Yue, Stephen, Montreal Quebec H4A 3H3 (CA); Elders, William James, Chatham Ontario N7M 5P4 (CA); Medeiros, Leo, Guelph Ontario N1G 1P4 (CA); Kiousis, Pete Nick, Birmingham Michigan 48009 (US)
(74) Representative: Jones, John Bryn

(57) **Abstract**

A stabilizer bar (14) includes having bends (21) forming angled portions (23). The angled portions are supported by bushings (16) that are secured by straps (18) to a vehicle frame (12). The stabilizer bar rotates about a axis (A). The bushings supporting the stabilizer bar have an axes that are transverse to the pivotal axis of the stabilizer bar and to one another. The bushings have flared or thickened portions (30) at their outer ends to provide additional bushing material since the misaligned pivotal axis permits the stabilizer bar to deflect the bushing as it rotates. The straps may be cupped so that they laterally locate the bushings as the stabilizer bar rotate about its pivotal axis.

## Description

### BACKGROUND OF THE INVENTION

This invention relates to a stabilizer bar bushing mount, and more particularly, the invention relates to an orientation of the bushings relative to a stabilizer bar axis of rotation.

A stabilizer bar is supported on a vehicle frame between suspension components on opposing sides of the vehicle, such as left and right control arms, for providing lateral stability to the vehicle during turning maneuvers. Typically, a pair of bushings support the stabilizer bar on the vehicle. The stabilizer bar typically includes one or more bends in the bar for packaging or other considerations. Depending upon the location of the bends, the bushings may be on an angled portion of the stabilizer bar. In the prior art, when the bushing is located on an angled portion, the bushing and its associated strap is forced to a longitudinal orientation relative to the vehicle during assembly and mounted to the vehicle so that the axis of the stabilizer bar is coaxial with the axis of the bushing.

Some stabilizer bar arrangements are subject to "walking", during which the stabilizer bar moves laterally relative to the bushing. Walking may be more likely with the angled configuration described above due to poor engagement between the bushings and stabilizer bar. Another cause of walking may be because the bushings are coaxial with one another. As the stabilizer bar moves laterally, it may collide with other suspension components. Therefore, what is needed is an improved stabilizer bar and bushing arrangement that minimizes or eliminates the tendency of the stabilizer bar to walk during operation.

### SUMMARY OF THE INVENTION

The inventive suspension assembly includes a stabilizer bar having bends forming angled portions. The angled portions are supported by a pair of bushings that are secured by straps to a vehicle frame. The stabilizer bar rotates about an axis. The bushings supporting the stabilizer bar have a support hole defining an axis transverse to the stabilizer bar axis. Also, the pair of bushings are arranged such that their respective axes are also transverse to each other.

The bushings may have flared or thickened portions at outer ends to provide additional bushing material. This is beneficial, since the transverse stabilizer bar axis permits the stabilizer bar to deflect the bushings more in this area as it rotates around the edge of the hole. A strap mounting the bushing may be cupped so that it laterally locates the bushing as the stabilizer bar rotates about its axis. Accordingly, the present invention provides an improved stabilizer bar and bushing arrangement that minimizes or eliminates the tendency of the bar to walk during operation.

The various features and advantages of this invention will become apparent to those skilled in the art from the following detailed description of the currently preferred embodiment. The drawings that accompany the detailed description can be briefly described as follows.

### BRIEF DESCRIPTION OF THE DRAWINGS

Figure 1 is an elevational view of the inventive suspension assembly.
Figure 2 is another example of the inventive suspension assembly.
Figure 3 is a cross-sectional view of the bushing and strap shown in Figure 2.
Figure 4 is a cross-sectional view of the strap and bushing shown in Figure 3 taken along lines 4-4.

### DETAILED DESCRIPTION OF THE PREFERRED EMBODIMENT

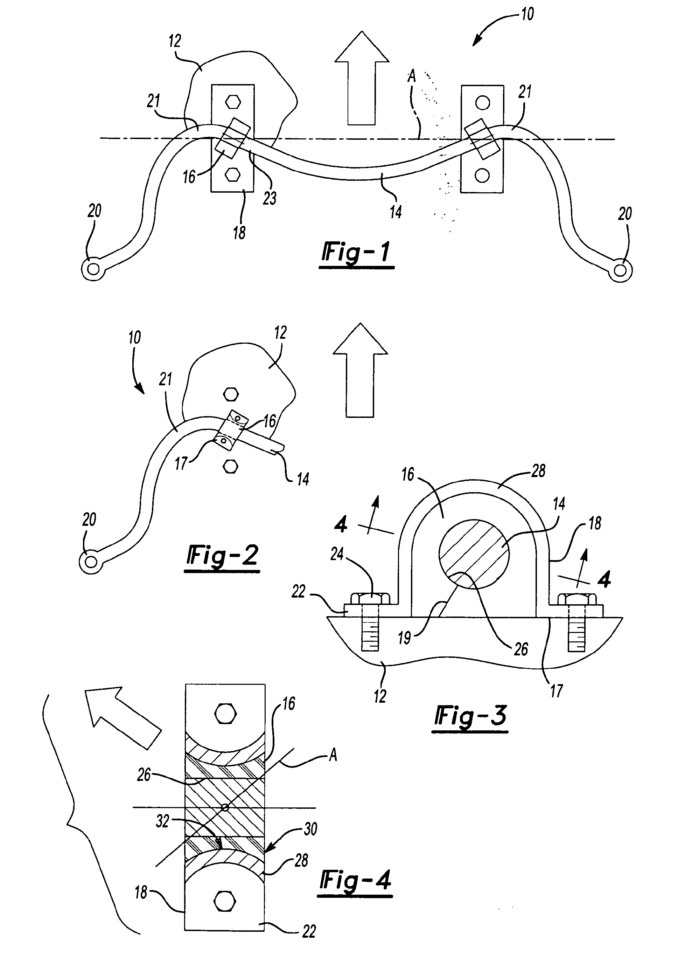

A suspension assembly 10 is shown in Figure 1. The assembly 10 includes a stabilizer bar 14 secured to a frame 12 by a pair of bushings 16 and straps 18. The stabilizer bar 14 includes opposing ends 20 that are secured to laterally opposing suspension components, such as left and right control arms. The stabilizer bar 14 may include bends 21 that form angled portions 23 of the stabilizer bar 14.

The stabilizer bar 14 rotates from ends 20 about an axis A during operation of the suspension assembly 10. The angled portions 23 are "angled" relative to this axis A. Each of the angled portions 23 is supported by a bushing 16. Each bushing 16 receives the angled portion 23 in a hole defining an axis that, according to an aspect of the present invention, is transverse to the axis A. Also, the axes of the bushings 16 are transverse to one another and not coaxial as in the prior art.

A strap 18 is used to support each bushing 16 at its axis, transverse to the axis A while still permitting the straps 18 to be arranged perpendicularly to axis A, and parallel to each other. In Figure 1, the straps 18 are arranged longitudinally with the bushings 16 retained at an angle relative to the straps 18. This arrangement enables the straps 18 to be secured to the vehicle in a typical manner. However, the bushing 16 remain coaxial with the angled portions 23. The longitudinal direction of the vehicle is indicated by the large arrow in the figures. Alternatively, the straps 18 may be arranged in the same direction as the bushings 16 and secured to the vehicle at an angle to the longitudinal direction, as shown in Figure 2.

Referring to Figure 3, the strap 18 includes opposing legs 22 that are secured to the frame 12 by fasteners 24. The bushings 16 have a hole 26 in which the angled portions 23 of the stabilizer bar 14 are inserted. Each bushing 16 includes a flat base 17 that is arranged adjacent to the frame 12. A cut 19 extends from the flat base 17 to the hole 26. The bushings 16 are opened at the cuts 19 to install the bushings 16 onto the angled portions 23.

Referring to Figure 4, since the stabilizer bar 14 will deflect the bushings 16 at their outer ends, the bushings 16 may include flared or thickened portions 30. The flared portions 30 withstand the additional deflection of the bushings 16 resulting from the bushings 16 being arranged at an angle relative to the axis A. A central portion 32 of the bushings is not as thick as the flared portions 30. In the example shown, the flared portions 30 of each bushing 16 form a concave surface that is cupped by an arched portion 28 of each strap 18. The straps 18 securely engages the bushings 16 between the flared portions 30 ensuring that the bushings 16 are retained laterally by the straps 18 as the stabilizer bar 14 rotates about the axis A. In the example shown, the bushings 16 are confined within opposing lateral planes defined by opposing sides of the straps 18. The complimentary curved surfaces of the bushings 16 and straps 18 are sufficient to laterally retain bushings 16.

By having the bushings 16 cocked at an angle relative to the axis A, the bushings 16 pinch the angled portions 23 of the stabilizer bar 14 minimizing or eliminating the tendency of the stabilizer bar 14 to move laterally relative to the bushings 16. Furthermore, by having the bushings 16 angled relative to one another there will be a reduced tendency for the stabilizer bar 14 to slide laterally relative to the bushings 16.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A suspension assembly comprising:
a stabilizer bar rotatable about an axis, said stabilizer bar including a first angled portion transverse to said axis; and
a first bushing having a hole with said first angled portion disposed within said hole, said first hole defining a first bushing axis transverse to said axis.

2. The assembly according to claim 1, wherein outer ends of said first bushing include thickened flared portions which are thicker in a radial direction than an intermediate central portion.

3. The assembly according to claim 1 or 2, comprising a strap supporting said first bushing with said first bushing arranged between said stabilizer bar and said strap, said strap having an arched portion cupped between said flared portions.

4. The assembly according to claim 2 or 3, wherein said flared portions and said central portion form a concave surface.

5. The assembly according to any preceding claim, comprising a second bushing having a second hole defining a second bushing axis transverse to said axis and said first bushing axis.

6. The assembly according to any preceding claim, wherein said first bushing includes a flat base having a cut enabling said first bushing to be opened at said cut for inserting said first angled portion.

7. A stabilizer bar bushing comprising:
a body having a hole defining an axis and flared portions at opposing axially outer ends, said flared portions being radially thicker than an intermediate central portion between said flared portions.

8. The stabilizer bar bushing according to claim 7, wherein said body includes a flat base having a cut enabling said stabilizer bar bushing to be opened at said cut to provide access to said hole.
